# EUROPÄISCHE PATENTSCHRIFT

(11) **EP 1 126 199 B1**
(45) Veröffentlichungstag und Bekanntmachung des Hinweises auf die Patenterteilung: **31.08.2005**
(21) Anmeldenummer: 01101830.6
(22) Anmeldetag: 26.01.2001
(51) Int. Cl.: F16H 61/46

(54) **Hydrostatischer Antrieb für eine Winde**
Hydrostatic transmission for a winch
Transmission hydrostatique pour un treuil

(30) Priorität: 14.02.2000 DE 10006407
(43) Veröffentlichungstag der Anmeldung: 22.08.2001
(73) Patentinhaber: Brueninghaus Hydromatik GmbH, 89275 Elchingen (DE)
(72) Erfinder: Rosenkranz, Roland, 89264 Weissenhorn (DE); Schneider, Armin, 89075 Ulm (DE)
(74) Vertreter: Körfer, Thomas

(56) Entgegenhaltungen:
- DE-A- 2 337 699
- DE-A- 3 643 114
- DE-A- 19 524 189
- US-A- 3 618 897
- US-A- 4 399 653
- US-A- 4 884 475
- PATENT ABSTRACTS OF JAPAN vol. 1995, no. 04, 31. Mai 1995 (1995-05-31) & JP 07 025591 A (KOBE STEEL LTD), 27. Januar 1995 (1995-01-27)

## Beschreibung

Die Erfindung betrifft einen hydrostatischen Antrieb für eine Winde zum Auf- und Abspulen eines Seils, einer Kette oder dergleichen, entsprechend dem Oberbegriff des Anspruchs 1, und wie aus der DE 3643114A bekannt ist.

Ein hydrostatischer Antrieb zum Antrieb von Fahrzeugen, jedoch nicht zum Antrieb einer Winde, ist beispielsweise aus der DE 195 24 189 A1 bekannt. Bei dem aus dieser Druckschrift hervorgehenden hydrostatischen Antrieb ist eine verstellbare Hydropumpe mit einem verstellbaren Hydromotor in einem geschlossenen Arbeitskreis verbunden. Die Hydropumpe wird von einem Verbrennungsmotor angetrieben. Der Hydromotor treibt über eine Abtriebswelle und ein nachgeschaltetes Getriebe die Antriebsräder eines Fahrzeugs an. Die Verstellung der Verstellvorrichtung der Hydropumpe erfolgt über zwei gegensinnig wirkende Elektromagneten, die von einer elektronischen Steuereinheit in Abhängigkeit von einem von einem Fahrtrichtungsgeber vorgegebenen Steuersignal angesteuert werden.

In der Praxis besteht das Problem, hydrostatische Antriebe zum Antrieb von Winden, beispielsweise Schiffswinden, so auszugestalten, daß die auf das mit der Winde verbundene Seil bzw. die auf die mit der Winde verbundene Kette einwirkende Kraft konstant gehalten wird. Ist z. B. ein Schiff mit dem von der Winde abgespulten Seil an einem Kai festgemacht, so ist das Schiff Wasserstandsänderungen ausgesetzt, die z. B. durch die Gezeiten hervorgerufen werden. Diese Hub- und Senkbewegung des Schiffes soll ausgeglichen werden, wobei die Kraft, mit welcher das Schiff an dem Kai gehalten wird, konstant gehalten wird. Eine andere Anwendung besteht z. B. darin, daß für ein an einem Steilhang arbeitendes Pistenfahrzeug die auf das Pistenfahrzeug einwirkende Hangabtriebskraft zumindest teilweise dadurch ausgeglichen werden soll, daß das Pistenfahrzeug über ein von einer Winde auf- und abspulbares Seil gehalten wird. Dabei soll das Seil eine unbegrenzte Fahrbewegung des Pistenfahrzeugs entlang des Hangs ermöglichen und unabhängig von der Position des Pistenfahrzeug eine konstante Haltekraft auf das Pistenfahrzeug ausüben. Für diese Anwendungen ist ein hydrostatischer Antrieb erforderlich, der die auf das Seil ausgeübte Kraft konstant hält. Diese Betriebsweise ist auch als Mooring-Betrieb bekannt.

Aus der US 4,399,653 ist ein hydrostatischer Antrieb bekannt. Dabei ist ein Sensor vorgesehen, der Geschwindigkeitsänderungen und/oder bestimmte Positionen der Last innerhalb des Betriebszyklusses erfasst.

Aus der DE-US 2 337 699 ist ein hydrostatischer Antrieb für die Lastenbewegung bekannt. Dabei ist eine Steuerung vorgesehen, die beim Betätigen des hydrostatischen Antriebs eine hydrostatischer Kraft aufbaut, um beim Lösen der Bremse eine Rücklaufbewegung der Last entgegenzuwirken.

Aus der JP 07 02-5591 ist eine Steuerung für eine hydraulische Winde bekannt. Die bekannte Steuerung dient insbesondere zur Verringerung der Ablassgeschwindigkeit in Abhängigkeit von der Tiefe der angehängten Last.

Der Erfindung liegt der Lösungsansatz zugrunde, zum Konstanthalten der auf das Seil bzw. die Kette einwirkende Kraft ein zum Ansteuern der Verstellvorrichtung ohnehin vorhandenes, elektrisch ansteuerbares Steuerventil zu verwenden. Dazu wird die auf das Seil bzw. die Kette einwirkende Kraft durch einen Sensor erfaßt und der Meßwert der elektronischen Steuereinheit übermittelt. Die elektronische Steuereinheit steuert das Steuerventil so an, daß das Steuerventil der Verstellvorrichtung einen solchen Stelldruck vorgibt, daß die auf das Seil bzw. die Kette einwirkende Kraft über den Regelkreislauf Sensor, elektronische Steuereinheit, Steuerventil,

Verstellvorrichtung, Hydropumpe, Arbeitskreislauf, Hydromotor konstant eingeregelt wird. Bei einer Zunahme der auf das Seil bzw. die Kette einwirkenden Kraft wird die Hydropumpe in Richtung Abspulen zurückgeschwenkt. Umgekehrt wird bei einer Abnahme der auf das Seil bzw. die Kette einwirkenden Kraft die Hydropumpe in Richtung Aufspulen weiter ausgeschwenkt. In analoger Weise kann durch Ansteuerung des Hydromotors vorgegangen werden. Durch diese elektrohydraulische Steuerung werden zusätzliche hydraulische Ventile und - abgesehen von dem Sensor - zusätzliche elektronische Komponenten für die Steuerfunktion des Konstanthaltens der auf das Seil bzw. die Kette einwirkenden Kraft vermieden.

In den Ansprüche 2 bis 14 sind vorteilhafte Weiterbildungen der Erfindung angegeben.

Es ist vorteilhaft, das Steuerventil entweder als 4/3-Wegeventil oder als 4/2-Wegeventil auszubilden. Dabei kann ein erster Eingang des Steuerventils mit einer Hydraulikfluidquelle, ein zweiter Eingang des Steuerventils mit einer Hydraulikfluidsenke, ein erster Ausgang des Steuerventils mit einer ersten Stelldruckkammer der Verstellvorrichtung und zweiter Ausgang des Steuerventils mit einer zweiten Stelldruckkammer der Verstellvorrichtung verbunden sein. Diese Ausgestaltung des Steuerventils erlaubt ein schnelles Ausschwenken und Zurückschwenken der Hydropumpe. Das Steuerventil kann durch elektrische Stellglieder, insbesondere durch Proportional-Elektromagnete, angesteuert werden.

Bei einer besonders vorteilhaften Weiterbildung ist ein zweiter Sensor vorgesehen, der den in der Hockdruck führenden Arbeitsleitung des Arbeitskreislaufs herrschenden Druck erfaßt. Übersteigt dieser Druck einen vorgegebenen Maximaldruck oder bei elektrischem Kurzschluß bzw. des Steuerventils, betätigt die elektronische Steuereinheit eine Notabschalt-Ventileinheit, die den Stelldruck der Stellvorrichtung so verändert, daß die Hydropumpe zurückgeschwenkt wird. Daraufhin nimmt der Druck in der Arbeitsleitung ab. Eine solche Notabschalt-Ventileinheit ist insbesondere vorteilhaft, wenn das Seil bzw. die Kette mechanisch blockiert wird. Diese Blockade bewirkt ein Blockieren der Winde und somit des Hydromotors. Der Druck in der Arbeitsleitung stromaufwärts des Hydromotors steigt signifikant an, was zu einer Zerstörung der Arbeitsleitung, der Hydropumpe oder des Hydromotors führen kann. Es ist deshalb vorteilhaft, wenn eine solche Blockade erkannt wird und die Hydropumpe entsprechend zurückgeschwenkt wird.

Die Notabschalt-Ventileinheit kann ein von der Steuereinheit angesteuertes elektrisch betätigbares Umschaltventil umfassen, das den Stelldruck für die Verstellvorrichtung z. B. dadurch verändert, daß der Stelldruck mit einem Zusatzdruck übersteuert wird. Dieser Zusatzdruck kann beispielsweise aus dem in der Arbeitsleitung herrschenden Hochdruck unter Vorschaltung eines Druckminderventils gewonnen werden. Weitere Notabschaltung ist durch einen nullschwenkbaren Hydromotor möglich, der im Störungsfall auf Null geschwenkt wird und somit einen Freilauf der Seilwinde herstellt.

Die Sensoren, das Steuerventil, die Notabschalt-Ventileinheit und weitere Geber, Sensoren oder Fehlerindikatoren sind vorteilhaft über einen elektronischen Steuerbus mit der elektronischen Steuereinheit verbunden.

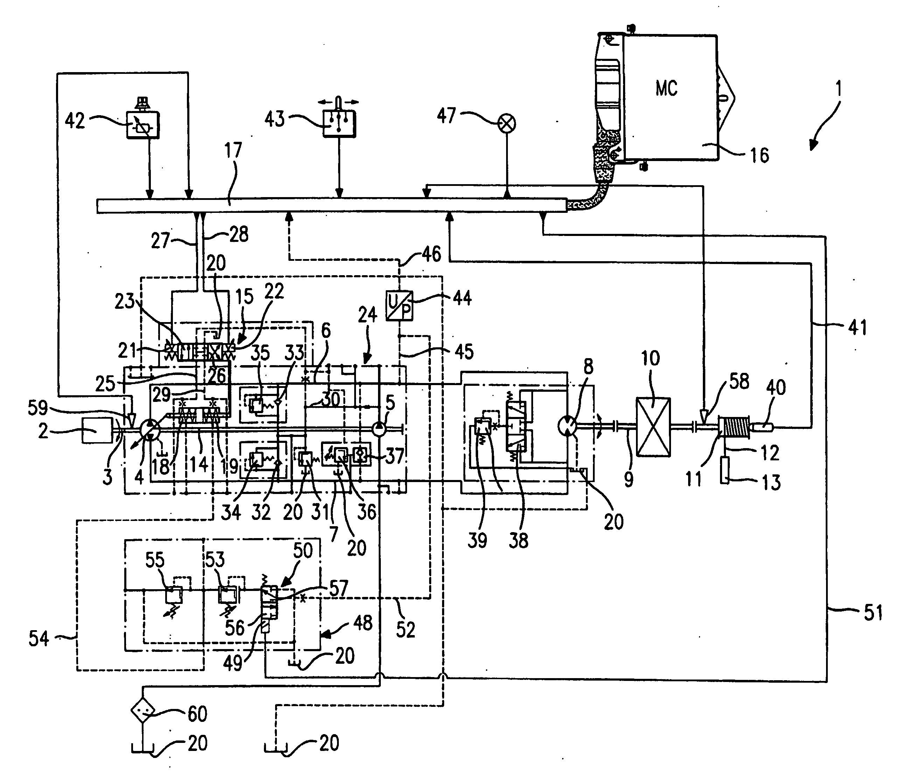

Nachfolgend wird ein Ausführungsbeispiel der Erfindung unter Bezugnahme auf die Zeichnung näher beschrieben. Die einzige Figur der Zeichnung zeigt ein Ausführungsbeispiel des erfindungsgemäßen hydrostatischen Antriebs.

Bei dem in der Figur gezeigten hydrostatischen Antrieb 1 treibt ein Motor 2, beispielsweise ein Dieselmotor, über eine Antriebswelle 3 eine verstellbare Hydropumpe 4 und eine Hilfspumpe 5 an. Die Hydropumpe 4 ist über eine Hochdruck führende Arbeitsleitung 6 und eine Niederdruck führende Arbeitsleitung 7, die einen Arbeitskreislauf 6, 7 bilden, mit einem im Ausführungsbeispiel nicht verstellbaren Hydromotor 8 verbunden. Der Hydromotor 8 kann jedoch ebenfalls verstellbar ausgebildet sein. Der Hydromotor 8 treibt über eine Abtriebswelle 9 und ein Schaltgetriebe 10 eine Winde 11 an. Die Winde 11 dient zum Auf- und Abspulen eines Seils 12 bzw. einer Kette oder dergleichen, das mit einer Last 13 beispielsweise einem Schiffsanker, verbunden sein kann.

Zum Verstellen des Fördervolumens bzw. Verdrängungsvolumens der Hydropumpe 4 dient eine Verstellvorrichtung 14. Der Stelldruck für die Verstellvorrichtung 14 wird von einem elektrisch ansteuerbaren Steuerventil 15 vorgegeben, das von einer elektronischen Steuereinheit 16 über einen Steuerbus 17 ansteuerbar ist. Das Steuerventil 15 ist im dargestellten Ausführungsbeispiel als 4/2-Wegeventil ausgebildet.

In der in der Figur dargestellten Neutralstellung werden die beiden Stelldruckkammern 18 und 19 der Verstellvorrichtung zu einem Hydraulikfluidtank 20 hin belüftet. Bei Betätigung des Steuerventils mit einem ersten als Proportional-Elektromagnet ausgebildeten Stellglied wird der Ventilkolben des kontinuierlich verstellbaren Steuerventils 15 in seine erste Ventilstellung 23 verschoben, so daß eine noch zu beschreibende Hydraulikfluidquelle 24 über eine erste Stelldruckleitung 25 mit der ersten Stelldruckkammer 18 der Verstellvorrichtung 14 verbunden ist. Die zweite Stelldruckkammer 19 der Verstellvorrichtung 14 hingegen ist mit dem Hydraulikfluidtank 20 verbunden. Die Hydropumpe 4 wird dadurch in eine erste Förderrichtung ausgeschwenkt. Bei Betätigung des zweiten ebenfalls als Proportional-Elektromagnet ausgebildeten Stellglieds 22 hingegen wird der Ventilkolben des Steuerventils 19 in eine zweite Ventilstellung 26 verschoben, so daß die zweite Stelldruckkammer 19 der Verstellvorrichtung 14 mit der Hydraulikfluidquelle 24 und die erste Stelldruckkammer 18 hingegen mit dem Druckfluidtank 20 verbunden wird. Dabei über die als Proportional-Elektromagnet ausgebildeten Stellglieder 21, 22 eine der ansteuernden Stromstärke proportionale Kraft auf den Ventilkolben des Steuerventils 15 aus, so daß sich in den Stelldruckkammern 18 und 19 ein der ansteuernden Stromstärke proportionaler Stelldruck einstellt und bis zu einem maximalen Schwenkwinkel der Hydropumpe hin jede Zwischenstellung einstellbar ist. Die Stellglieder 21, 22 werden über elektrische Steuerleitungen 27, 28 angesteuert.

Die Hydraulikfluidquelle 24 besteht aus der bereits beschriebenen Hilfspumpe 5, die Hydraulikfluid über einen Filter 60 aus dem Hydraulikfluidtank aussaugt und in eine Speiseleitung 30 einspeist. Der Druck in der Speiseleitung 30 wird durch ein Druckbegrenzungsventil 31 begrenzt. Die Hilfspumpe 5 dient ferner zum Eispeisen von Hydraulikfluid in die jeweils niederdruckführende Arbeitsleitung 6, 7 über ein Rückschlagventil 32 bzw. 33. Zur Begrenzung des Drucks in der Arbeitsleitung 6 dient ein Druckbegrenzungsventil 35, während zur Begrenzung des Drucks in der Arbeitsleitung 7 ein Druckbegrenzungsventil 34 dient. Überschreitet der Druck in der jeweils hochdruckführenden Arbeitsleitung 6, 7 einen vorgegebenen Grenzdruck, so öffnet ein Begrenzungsventil 36, das über ein Wechselventil 37 mit der jeweils hochdruckführenden Arbeitsleitung 6, 7 verbunden ist. Das Öffnen des Begrenzungsventils 36 reduziert den Stelldruck und führt zu einem Zurückschwenken der Hydropumpe 4.

Die jeweils Niederdruck führende Arbeitsleitung 6, 7 ist über ein Wechselventil 38 mit einem Begrenzungsventil 39 verbunden, das sicherstellt, daß der Druck in der jeweils Niederdruck führenden Arbeitsleitung 6, 7 einen vorgegebenen Grenzwert nicht überschreitet.

An der Winde 11 ist ein erster elektronischer Sensor 40 vorgesehen, der die auf das Seil 12 bzw. die Kette einwirkende Kraft erfaßt. Dies kann indirekt durch Messung des auf die Windentrommel einwirkenden Drehmoments unter Berücksichtigung des Durchmessers der Windentrommel erfolgen. Der erste Sensor 40 ist über eine elektrische Leitung 41 und den elektronischen Steuerbus 17 mit der elektronischen Steuereinheit 16 verbunden. Über den Steuerbus 17 ist ferner ein Zugkraft-Geber 42 verbunden, mit welchem der Sollwert der auf das Seil 12 bzw. die Kette einwirkenden Kraft stufenlos vorgebbar ist. Ferner ist ein Richtungs-Geber 43 über den elektronischen Steuerbus 17 mit der elektronischen Steuereinheit 16 verbunden. Über den Richtungs-Geber 43 kann die Aufspulrichtung bzw. Abspulrichtung für die Winde 11 sowie die Aufspul- bzw.

Abspulgeschwindigkeit vorgegeben werden. Ferner kann der Richtungs-Geber 43 in eine Zugkraft-Konstanthaltestellung bzw. Mooring-Stellung gestellt werden. In dieser Stellung steuert die elektronische Steuereinheit 16 die Hydropumpe 4 so an, daß die auf das Seil 12 bzw. die Kette einwirkende Kraft konstant gehalten wird.

Die Hochdruck führende Arbeitsleitung 6 des Arbeitskreislaufes 6, 7 ist über eine Druckleitung 45 mit einem zweiten elektronischen Sensor 44 verbunden, der seinerseits über eine elektrische Leitung 46 und den elektronischen Steuerbus 17 mit der elektronischen Steuereinheit 16 verbunden ist. Der zweite elektronische Sensor 44 mißt den in der Hochdruck führenden Arbeitsleitung 6 herrschenden Druck und übersetzt diesen in ein dem Druck entsprechendes elektronisches Signal. Ferner ist ein Fehlerindikator 47 in Form einer optischen und/oder akustischen Signaleinrichtung vorgesehen, die ebenfalls über den Steuerbus 17 mit der elektronischen Steuereinheit 16 in Verbindung steht.

Entsprechend der vorteilhaften Weiterbildung ist ferner eine Notabschalt-Ventileinheit 48 vorgesehen. Die Notabschalt-Ventileinheit 48 umfaßt ein über ein elektrisches Stellglied 49, beispielsweise einen Elektromagneten, ansteuerbares Umschaltventil 50. Das elektrische Stellglied 49 ist über eine elektrische Steuerleitung 51 mit dem elektronischen Steuerbus 17 und somit mit der elektronischen Steuereinheit 16 verbunden. Das Umschaltventil 50 steht über eine Druckleitung 52 mit der Hochdruck führenden Arbeitsleitung 6 in Verbindung. Dem Umschaltventil 50 ist im dargestellten Ausführungsbeispiel ein Druckminderventil 53 nachgeschaltet, das sich zwischen dem Umschaltventil 15 und einer Verbindungsleitung 54 befindet, die zu der zweiten Stelldruckkammer 19 der Verstellvorrichtung 14 führt. Zwischen der Verbindungsleitung 54 und dem Hydraulikfluidtank 20 ist bei dem dargestellten bevorzugtem Ausführungsbeispiel noch ein Druckbegrenzungsventil 55 vorgesehen.

Die Funktionsweise des erfindungsgemäßen hydrostatischen Antriebs ist wie folgt:

Wird der Richtungs-Geber 43 in eine Abspulstellung gebracht, so wird der Schwenkwinkel der Hydropumpe 4 entsprechend der gewählten Abspulgeschwindigkeit so verschwenkt, daß der Hydromotor 8 so angetrieben wird, daß das Seil 12 bzw. die Kette von der Winde 11 abgespult wird. Umgekehrt wird, wenn der Richtungs-Geber 43 in die Aufspulstellung gestellt wird, der Schwenkwinkel der Hydropumpe 4 entsprechend der gewählten Aufspulgeschwindigkeit so verschwenkt, daß der Hydromotor 8 so angetrieben wird, daß das Seil 12 bzw. die Kette auf die Winde 11 aufgespult wird.

Wird der Richtungs-Geber 43 jedoch in eine Kraft-Konstanthaltestellung bzw. Mooring-Stellung gestellt, so wird ein Regelkreislauf in Betrieb gesetzt, der aus dem ersten elektronischen Sensor 40, der elektronischen Steuereinheit 16, dem Steuerventil 15, der Verstellvorrichtung 14, der Hydropumpe 4, dem Arbeitskreislauf 6, 7 und dem Hydromotor 8 besteht. Dabei wird durch den ersten elektronischen Sensor 40 fortwährend die auf das Seil 12 bzw. die Kette einwirkende Kraft gemessen und der Meßwert über den elektronischen Steuerbus 17 an die elektronische Steuereinheit 16 weitergeleitet. Die elektronische Steuereinheit 16 vergleicht den mittels des ersten Sensors 40 gemessenen Ist-Wert mit dem von dem Zugkraft-Geber 42 vorgebbaren Soll-Wert.

Ist der gemessene Ist-Wert der Zugkraft kleiner als der vorgegebene Soll-Wert, so wird das Steuerventil 15 so angesteuert, daß diese den Stelldruck in der Stelldruckkammer 18 erhöht und somit die Hydropumpe 4 auf einen größeren Schwenkwinkel ausgeschwenkt wird. Dadurch wird auf dem Hydromotor 8 ein größeres Drehmoment ausgeübt, das über das Getriebe 10 und die Winde 11 auf das Seil 12 bzw. die Kette übertragen wird. Stellt die elektronische Steuereinheit 16 fest, daß der von dem ersten Sensor 40 gemessene Ist-Wert der Zugkraft mit dem von dem Zugkraft-Geber 42 vorgegeben Soll-Wert der Zugkraft übereinstimmt, so wird der Schwenkwinkel der Hydropumpe 4 über das Steuerventil 21 und die Verstellvorrichtung 14 nicht weiter verändert, so daß sich eine Gleichgewichtslage einstellt.

Stellt die elektronische Steuereinheit 16 dagegen fest, daß der von dem ersten Sensor 40 gemessene Ist-Wert der Zugkraft kleiner ist als der von dem Zugkraft-Geber 42 vorgegebene Soll-Wert, so steuert die elektronische Steuereinheit 16 das Steuerventil 15 so an, daß der Stelldruck in der Stelldruckkammer 18 vermindert wird und somit die Hydropumpe 4 auf einen geringeren Schwenkwinkel zurückgeschwenkt wird. Dadurch wird das auf den Hydromotor 8 ausgeübte Drehmoment verringert, wodurch sich die auf das Seil 12 bzw. die Kette ausgeübte Kraft vermindert, bis sich wiederum eine Gleichgewichtslage einstellt.

Auf diese Weise wird die in dem Seil 12 herrschende Zugkraft unabhängig von der abgespulten Länge des Seiles 12 konstant gehalten. Durch die erfindungsgemäße Kombination einer elektronischen Regelung mit einer hydraulischen Ansteuerung wird ein hydraulischer Zusatzaufwand für die beschriebene Konstantzugkraftregelung vermieden. Die erfindungsgemäße Lösung kommt hingegen mit den für die Ansteuerung des Fahrantriebs ohnehin vorhandenen hydraulischen Ventilen aus. Das Steuerventil 15 ist auch bei einem Fahrantrieb ohne die Konstantzugkraftregelung ohnehin vorhanden und kann für die Konstantzugkraftregelung gleichzeitig Verwendung finden.

Nachfolgend wird ein Notabschalt-Betrieb entsprechend einer erfindungsgemäßen Weiterbildung beschrieben.

Dabei überwacht der zweite Sensor 44 fortwährend den in der Hochdruck führenden Arbeitsleitung 6 herrschenden Druck und übermittelt den gemessenen Druckwert über die Leitung 46 und den elektronischen Steuerbus 17 an die elektronische Steuereinheit 16. Stellt die elektronische Steuereinheit 16 fest, daß der gemessene Druck höher als ein vorgebbarer Maximaldruck ist, so löst die elektronische Steuereinheit 16 den Notabschalt-Betrieb aus. Der Notabschalt-Betrieb wird über den Fehlerindikator 47 optisch und/oder akustisch angezeigt. Ferner wird das Signal auf der elektrischen Leitung 51 abgeschaltet. Ein solcher überhöhter Druck in der Arbeitsleitung 6 tritt beispielsweise auf, wenn das Seil 12 im Aufspulbetrieb blockiert ist. Dadurch wird der Hydromotor 8 blockiert und in der Arbeitsleitung 6 staut sich ein überhöhter Druck auf. Wäre der erfindungsgemäße hydrostatische Antrieb 1 nicht mit dem Notabschalt-Betrieb ausgestattet, so könnte eine Beschädigung des Seils 12, der Winde 11, des Getriebes 10, des Hydromotors 8 oder anderer Komponenten eintreten. Durch den Notabschalt-Betrieb entsprechend der erfindungsgemäßen Weiterbildung wird dies jedoch wirkungsvoll vermieden.

Beim normalen, ungestörten Betrieb des hydrostatischen Antriebs 1 liegt an der elektrischen Leitung 51 ein Signal an, so daß das elektrische Stellglied 49 das Umschaltventil 49 so betätigt, daß sich dieses in der ersten Schaltstellung 56 befindet. In dieser Schaltstellung 56 ist der Eingang des Druckminderventils 53 mit dem Hydraulikfluidtank 20 verbunden und der in der Stelldruckkammer 19 herrschende Stelldruck wird nicht beeinflußt.

In dem Notabschalt-Betrieb hingegen wird das Signal auf der elektrischen Steuerleitung 51 abgeschaltet, so daß das elektrische Stellglied 59 das Umschaltventil 50 freigibt. Dieses wird dadurch in die Schaltstellung 57 umgeschaltet. Dadurch wird das Druckminderventil 53 über die Leitung 52 mit der Hochdruck führenden Arbeitsleitung 6 verbunden. Das Druckminderventil 53 reduziert den in der Arbeitsleitung 6 herrschenden Hochdruck auf einen verminderten Druck, der durch das Druckbegrenzungsventil 55 zusätzlich begrenzt wird. Dieser verminderte Druck wird über die Verbindungsleitung 54 als Zusatzdruck an die Stelldruckkammer 19 übertragen und erhöht den in der Stelldruckkammer 19 herrschenden Stelldruck. Somit wird die Hydropumpe 4 auf einen geringeren Schwenkwinkel zurückgeschwenkt, wodurch der übermäßige Druck in der Hochdruck führenden Arbeitsleitung 6 vermindert wird. Eine Zerstörung der Hydropumpe 4, der Arbeitsleitung 6 oder des Hydromotors 8 wird deshalb entgegengewirkt. Ferner wird das auf den Hydromotor 8 ausgeübte Drehmoment verringert, wodurch die auf die Winde 11 und das Seil 12 ausgeübte Kraft soweit vermindert wird, daß eine Schädigung vermieden wird.

Es kann ein dritter Sensor 58 vorgesehen sein, der die Fahrtrichtung der Winde 11 feststellt. Entsprechend kann ein vierter Sensor 59 vorgesehen sein, der die Drehzahl des die Hydropumpe 4 antreibenden Motors 2 feststellt. Diese Meßwerte können zur Ansteuerung des Steuerventils 15 von der elektronischen Steuereinheit 16 ebenfalls herangezogen werden.

Die Erfindung ist nicht auf das dargestellte Ausführungsbeispiel beschränkt. Insbesondere können das Steuerventil 15, die Verstellvorrichtung 14 sowie die Notabschalt-Ventileinheit 48 auch in anderer Weise ausgestaltet sein.

## Patentansprüche

1. Hydrostatischer Antrieb (1) mit
einer Hydropumpe (4),
einem Hydromotor (8), der mit der Hydropumpe (4) in einem hydraulischen Arbeitskreislauf (6, 7) verbunden ist und eine Antriebswelle (9) antreibt,
einer Verstellvorrichtung (14) zum Verstellen des Verdrängungsvolumens der Hydropumpe (4) und/oder des Hydromotors (8) in Abhängigkeit von einem Stelldruck,
einem elektrisch ansteuerbaren Steuerventil (15), das in Abhängigkeit von einem elektrischen Steuersignal den Stelldruck für die Verstellvorrichtung (14) vorgibt, und einer elektronischen Steuereinheit (16) zur Ansteuerung des Steuerventils (15),
wobei mit der Antriebswelle (9) eine Winde (11) zum Auf-und Abspulen eines Seiles (12), einer Kette oder dergleichen verbunden ist,
wobei ein mit der elektronischen Steuereinheit (16) verbundener erster Sensor (40) vorgesehen ist, der die auf das Seil (12) oder die Kette einwirkende Kraft erfasst, und
wobei die elektronische Steuereinheit (16) das Steuerventil (15) so ansteuert, dass die auf das Seil (12) oder die Kette einwirkende Kraft zumindest annähernd konstant gehalten wird,
**dadurch gekennzeichnet,**
**dass** ein zweiter Sensor (44) vorgesehen ist, der den in der Hochdruck führenden Arbeitsleitung (6) des Arbeitskreislaufs (6, 7) herrschenden Druck erfasst,
**dass** die elektronische Steuereinheit (16) eine Notabschalt-Ventileinheit (48) betätigt, wenn der von dem zweiten Sensor (44) ermittelte Druck höher als ein vorgegebener Maximaldruck ist, und
**dass** die Notabschalt-Ventileinheit (48) bei ihrer Betätigung den Stelldruck für die Verstellvorrichtung (14) verändert.

2. Hydrostatischer Antrieb nach Anspruch 1,
**dadurch gekennzeichnet,**
**dass** das elektrisch ansteuerbare Steuerventil (15) ein 4/3-Wegventil oder ein 4/2-Wegventil ist.

3. Hydrostatischer Antrieb nach Anspruch 2,
**dadurch gekennzeichnet,**
**dass** ein erster Eingang des Steuerventils (15) mit einer Hydraulikfluidquelle (24), ein zweiter Eingang des Steuerventils (15) mit einer Hydraulikfluidsenke oder einem Hydraulikfluidtank (20), ein erster Ausgang des Steuerventils (15) mit einer ersten Stelldruckkammer (18) der Verstellvorrichtung (14) und ein zweiter Ausgang des Steuerventils (15) mit einer zweiten Stelldruckkammer (19) der Verstellvorrichtung (14) verbunden ist.

4. Hydrostatischer Antrieb nach Anspruch 3,
**dadurch gekennzeichnet,**
**dass** an dem Steuerventil (15) ein erstes elektrisches Stellglied (21), um das Steuerventil (15) in eine erste Ventilstellung (23) zu verschieben, in welcher die Hydraulikfluidquelle (24) mit der ersten Stelldruckkammer (18) der Verstellvorrichtung (14) verbunden ist, und ein zweites elektrisches Stellglied (22), um das Steuerventil (15) in eine zweite Ventilstellung (26) zu verschieben, in welcher die Hydraulikfluidquelle (24) mit der zweiten Stelldruckkammer (19) der Verstellvorrichtung (14) verbunden ist, vorgesehen sind.

5. Hydrostatischer Antrieb nach Anspruch 4,
**dadurch gekennzeichnet,**
**dass** die Stellglieder (21, 22) Proportional-Elektromagnete sind, die auf das Steuerventil (15) eine zu der ansteuernden Stromstärke proportionale Stellkraft ausüben.

6. Hydrostatischer Antrieb nach einem der Ansprüche 1 bis 5,
**dadurch gekennzeichnet,**
**dass** der erste Sensor (40) die auf das Seil (12) oder die Kette einwirkende Kraft durch Messen des auf die Winde (11) einwirkenden Drehmoments erfasst.

7. Hydrostatischer Antrieb nach einem der Ansprüche 1 bis 6,
**dadurch gekennzeichnet,**
**dass** die Notabschalt-Ventileinheit (48) ein elektrisch betätigbares Umschaltventil (50) umfasst, das eine Stelldruckkammer (19) der Verstellvorrichtung (14) bei seiner Betätigung mit einem Zusatzdruck beaufschlagt.

8. Hydrostatischer Antrieb nach Anspruch 7,
**dadurch gekennzeichnet,**
**dass** das Umschaltventil (50) mit der Hochdruck führenden Arbeitsleitung (6) des Arbeitskreislaufes (6, 7) verbunden ist und zwischen dem Umschaltventil (50) und der Stelldruckkammer (19) ein Druckminderventil (53) angeordnet ist.

9. Hydrostatischer Antrieb nach Anspruch 7 oder 8,
**dadurch gekennzeichnet,**
**dass** zwischen der Stelldruckkammer (19) und einem Hydraulikfluidtank (20) ein Druckbegrenzungsventil (55) angeordnet ist.

10. Hydrostatischer Antrieb nach einem der Ansprüche 1 bis 9,
**dadurch gekennzeichnet,**
**dass** der erste Sensor (40) der zweite Sensor (44), das Steuerventil (15) und die Notabschalt-Ventileinheit (48) über einen elektronischen Steuerbus (17) mit der elektronischen Steuereinheit (16) verbunden sind.

11. Hydrostatischer Antrieb nach Anspruch 10,
**dadurch gekennzeichnet,**
**dass** ein Zugkraft-Geber (42) zur Vorgabe der auf das Seil (12) oder die Kette einwirkenden Kraft mit dem elektronischen Steuerbus (17) verbunden ist.

12. Hydrostatischer Antrieb nach Anspruch 10 oder 11,
**dadurch gekennzeichnet,**
**dass** ein Richtungs-Geber (43) zur Vorgabe der Auf- und Abspulrichtung der Winde (11) mit dem elektronischen Steuerbus (17) verbunden ist.

13. Hydrostatischer Antrieb nach einem der Ansprüche 10 bis 12,
**dadurch gekennzeichnet,**
**dass** ein dritter Sensor (58) zum Erfassen der Auf- und Abspulrichtung der Winde (11) mit dem elektronischen Steuerbus (17) verbunden ist.

14. Hydrostatischer Antrieb nach einem der Ansprüche 10 bis 13,
**dadurch gekennzeichnet,**
**dass** ein vierter Sensor (59) zum Erfassen der Drehzahl eines die Hydropumpe antreibenden Motors (2) mit dem elektronischen Steuerbus (17) verbunden ist.

15. Hydrostatischer Antrieb nach einem der Ansprüche 10 bis 14,
**dadurch gekennzeichnet,**
**dass** ein Fehlerindikator (47) mit dem elektronischen Steuerbus (17) verbunden ist.

## Claims

1. Hydrostatic drive (1) with
a hydraulic pump (4),
a hydraulic motor (8), which is connected to the hydraulic pump (4) in a hydraulic operating circuit (6, 7) and drives a drive shaft (9),
an adjusting device (14) for adjusting the displacement volume of the hydraulic pump (4) and/or the hydraulic motor (8) as a function of an actuating pressure,
an electrically actuatable control valve (15), which specifies the actuating pressure for the adjusting device (14) as a function of an electrical control signal, and an electronic control unit (16) for actuating the control valve (15),
a winch (11) for winding and unwinding a cable (12), a chain or the like being connected to the drive shaft (9),
a first sensor (40) connected to the electronic control unit being provided, which sensor detects the force acting on the cable (12) or the chain, and
the electronic control unit (16) actuating the control valve (15) such that the force acting on the cable (12) or the chain is kept at least approximately constant,
**characterized in that**
a second sensor (44) is provided, which detects the pressure prevailing in the operating line (6) of the operating circuit (6, 7) carrying the high pressure,
that the electronic control unit (16) operates an emergency stop valve unit (48) if the pressure ascertained by the second sensor (44) is higher than a predetermined maximum pressure, and
that the emergency stop valve unit (48) changes the actuating pressure for the adjusting device (14) when it is operated.

2. Hydrostatic drive according to claim 1,
**characterized in that**
the electrically actuatable control valve (15) is a 4/3-way valve or a 4/2-way valve.

3. Hydrostatic drive according to claim 2,
**characterized in that**
a first input of the control valve (15) is connected to a hydraulic fluid source (24), a second input of the control valve (15) is connected to a hydraulic fluid sink or a hydraulic fluid tank (20), a first output of the control valve (15) is connected to a first actuating pressure chamber (18) of the adjusting device (14) and a second output of the control valve (15) is connected to a second actuating pressure chamber (19) of the adjusting device (14).

4. Hydrostatic drive according to claim 3,
**characterized in that**
provided at the control valve (15) are a first electric actuator (21), to move the control valve (15) into a first valve position (23), in which the hydraulic fluid source (24) is connected to the first actuating pressure chamber (18) of the adjusting device (14), and a second electric actuator (22), to move the control valve (15) into a second valve position (26), in which the hydraulic fluid source (24) is connected to the second actuating pressure chamber (19) of the adjusting device (14).

5. Hydrostatic drive according to claim 4,
**characterized in that**
the actuators (21, 22) are proportional electromagnets, which exert an actuating force proportional to the actuating current strength on the control valve (15).

6. Hydrostatic drive according to one of claims 1 to 5,
**characterized in that**
the first sensor (40) detects the force acting on the cable (12) or the chain by measuring the torque acting on the winch (11).

7. Hydrostatic drive according to one of claims 1 to 6,
**characterized in that**
the emergency stop valve unit (48) comprises an electrically operable changeover valve (50), which acts with an additional pressure on an actuating pressure chamber (19) of the adjusting device (14) when operated.

8. Hydrostatic drive according to claim 7,
**characterized in that**
the changeover valve (50) is connected to the operating line (6) of the operating circuit (6, 7) carrying high pressure and a pressure reducing valve (53) is arranged between the changeover valve (50) and the actuating pressure chamber (19).

9. Hydrostatic drive according to claim 7 or 8,
**characterized in that**
a pressure limiting valve (55) is arranged between the actuating pressure chamber (19) and a hydraulic fluid tank (20).

10. Hydrostatic drive according to one of claims 1 to 9,
**characterized in that**
the first sensor (40), the second sensor (44), the control valve (15) and the emergency stop valve unit (48) are connected via an electronic control bus (17) to the electronic control unit (16).

11. Hydrostatic drive according to claim 10,
**characterized in that**
a tensile force sensor (42) for specifying the force acting on the cable (12) or the chain is connected to the electronic control bus (17).

12. Hydrostatic drive according to claim 10 or 11,
**characterized in that**
a direction sensor (43) for specifying the winding and unwinding direction of the winch (11) is connected to the electronic control bus (17).

13. Hydrostatic drive according to one of claims 10 to 12,
**characterized in that**
a third sensor (58) for detecting the winding and unwinding direction of the winch (11) is connected to the electronic control bus (17).

14. Hydrostatic drive according to one of claims 10 to 13,
**characterized in that**
a fourth sensor (59) for detecting the speed of a motor (2) driving the hydraulic pump is connected to the electronic control bus (17).

15. Hydrostatic drive according to one of claims 10 to 14,
**characterized in that**
a fault indicator (47) is connected to the electronic control bus (17).

## Revendications

1. Entraînement hydrostatique (1) comportant
une pompe hydraulique (4),
un moteur hydraulique (8) relié à la pompe hydraulique (4) dans un circuit de travail hydraulique (6, 7) et qui entraîne un arbre menant,
un dispositif de déplacement (14) pour le déplacement du volume déplacé de la pompe hydraulique (4) et/ou du moteur hydraulique (8) en fonction d'une pression de commande,
une soupape de commande (15) à commande électrique qui indique la pression de commande pour le dispositif de déplacement (14) en fonction d'un signal de commande électrique et une unité de commande électronique (16) pour commander la soupape de commande (15),
un treuil (11), permettant l'enroulement et le déroulement d'un câble (12), d'une chaîne, ou autres, étant relié à l'arbre menant (9),
et dans lequel est prévu un premier capteur (40), relié à l'unité de commande électronique (16) et qui détecte la force agissant sur le câble (12) ou la chaîne, et
l'unité de commande électronique (16) commandant la soupape de commande (15) de manière à ce que la force agissant sur le câble (12) ou la chaîne soit maintenue au moins approximativement constante,
**caractérisé en ce qu'**il est prévu
un deuxième capteur (44) qui détecte la pression qui règne dans la conduite de travail (6), transportant la haute pression du circuit de travail (6, 7), **en ce que** l'unité de commande électronique (16) actionne une unité de soupape pour la déconnexion d'urgence (48) lorsque la pression déterminée par le deuxième capteur (44) est supérieure à une pression maximale prédéfinie et
**en ce que** l'unité de soupape pour la déconnexion d'urgence (48), lorsqu'on l'actionne, modifie la pression de commande du dispositif de déplacement (14).

2. Entraînement hydrostatique selon la revendication 1,
**caractérisé en ce que**
la soupape de commande à commande électrique (15) est un distributeur 4/3 ou un distributeur 4/2 voies.

3. Entraînement hydrostatique selon la revendication 2,
**caractérisé en ce qu'**
une première entrée de la soupape de commande (15) est reliée à une source de fluide hydraulique (24), une deuxième entrée de la soupape de commande (15) à un collecteur de fluide hydraulique ou à une cuve de fluide hydraulique (20), une première sortie de la soupape de commande (15) à une première chambre de pression de commande (18) du dispositif de déplacement (14) et une deuxième sortie de la soupape de commande (15) à une deuxième chambre de pression de commande (19) du dispositif de déplacement (14).

4. Entraînement hydrostatique selon la revendication 3,
**caractérisé en ce qu'**
il est prévu, sur la soupape de commande (15) un premier actionneur électrique (21) pour déplacer la soupape de commande (15) dans une première position de soupape (23) dans laquelle la source de fluide hydraulique (24) est reliée à la première chambre de pression de commande (18) du dispositif de déplacement (14) et un deuxième actionneur électrique (22) pour déplacer la soupape de commande (15) dans une deuxième position de soupape (26) dans laquelle la source de fluide hydraulique (24) est reliée à la deuxième chambre de pression de commande (19) du dispositif de déplacement (14).

5. Entraînement hydrostatique selon la revendication 4,
**caractérisé en ce que**
les éléments d'ajustage (21, 22) sont des électroaimants proportionnels qui exercent, sur la soupape de commande (15), une force de commande proportionnelle à l'intensité de courant de commande.

6. Entraînement hydrostatique selon l'une quelconque des revendications 1 à 5,
**caractérisé en ce que**
le premier capteur (40) détecte la force agissant sur le câble (12) ou la chaîne en mesurant le couple de rotation agissant sur le treuil (11).

7. Entraînement hydrostatique selon l'une quelconque des revendications 1 à 6,
**caractérisé en ce que**
l'unité de soupape pour la déconnexion d'urgence (48) comporte une soupape d'inversion à actionnement électrique (50) qui alimente une chambre de pression de commande (19) du dispositif de déplacement (14) en une pression supplémentaire lorsqu'on l'actionne.

8. Entraînement hydrostatique selon la revendication 7,
**caractérisé en ce que**
la soupape d'inversion (50) est reliée à la conduite de travail (6), transportant la haute pression, du circuit de travail (6, 7) et un réducteur de pression (53) est disposé entre la soupape d'inversion (50) et la chambre de pression de commande (19).

9. Entraînement hydrostatique selon la revendication 7 ou 8,
**caractérisé en ce qu'**
un régulateur de pression (55) est disposé entre la chambre de pression de commande (19) et une cuve de fluide hydraulique (20).

10. Entraînement hydrostatique selon l'une quelconque des revendications 1 à 9,
**caractérisé en ce que**
le premier capteur (40), le deuxième capteur (44), la soupape de commande (15) et l'unité de soupape pour la déconnexion d'urgence (48) sont reliés à l'unité de commande électronique (16) par l'intermédiaire d'un bus de commande électronique (17).

11. Entraînement hydrostatique selon la revendication 10,
**caractérisé en ce qu'**
un transmetteur d'effort de traction (42), permettant de prédéfinir la force agissant sur le câble (12) ou la chaîne, est relié au bus de commande électronique (17).

12. Entraînement hydrostatique selon la revendication 10 ou 11,
**caractérisé en ce qu'**
un transmetteur de direction (43), permettant de prédéfinir le sens d'enroulement et de déroulement du treuil (11), est relié au bus de commande électronique (17).

13. Entraînement hydrostatique selon l'une quelconque des revendications 10 à 12,
**caractérisé en ce qu'**
un troisième capteur (58), permettant la détection du sens d'enroulement et de déroulement du treuil (11), est relié au bus de commande électronique (17).

14. Entraînement hydrostatique selon l'une quelconque des revendications 10 à 13,
**caractérisé en ce qu'**
un quatrième capteur (59), permettant la détection de la vitesse de rotation d'un moteur (2) entraînant la pompe hydraulique, est relié au bus de commande électronique (17).

15. Entraînement hydrostatique selon l'une quelconque des revendications 10 à 14,
**caractérisé en ce qu'**
un indicateur d'erreur (47) est relié au bus de commande électronique (17).
